# EUROPEAN PATENT APPLICATION

(11) **EP 1 046 619 A2**
(43) Date of publication of application: **25.10.2000**
(21) Application number: 00303456.8
(22) Date of filing: 25.04.2000
(51) Int. Cl.: C03C 25/12

(54) **Coated optical fibres and their manufacture**

(30) Priority: 21.04.1999 JP 11385199
(71) Applicant: SHIN-ETSU CHEMICAL CO., LTD., Chiyoda-ku Tokyo (JP)
(72) Inventor: Ohba, Toshio, c/o Advanced Functional Materials, Annaka-shi, Gunma-ken (JP); Aoki, Hisashi, c/o Advanced Functional Materials, Annaka-shi, Gunma-ken (JP)
(74) Representative: Stoner, Gerard Patrick

(57) **Abstract**

A coated optical fiber is manufactured by applying a coating material to an optical fiber having an initial transmission loss and irradiating electron beams accelerated at an accelerating voltage of up to 150 kV to the coating material for curing. After the coating material is cured with electron beams, the coated optical fiber has a transmission loss which is 1.00 to 1.10 times the initial transmission loss. The coated optical fiber has a minimized increase of transmission loss after curing.

## Description

This invention relates to a coated optical fiber suitable for use in optical communications and to methods for preparing the same.

### BACKGROUND

Optical communications fibers include a variety of types such as quartz glass, multi-component glass and plastic fibers. In reality, quartz glass fibers are vastly used in a wide variety of applications because of their light weight, low loss, high durability and high transmission capacity. Since quartz glass fibers are very thin and sensitive to external factors, quartz glass fibers for optical communications are generally of the construction that a quartz glass fiber which is spun from a melt is coated with a liquid curable resin capable of curing to a soft state, the coating is cured to form a primary coating, and the primary coating is protected with a secondary coating using a liquid curable resin capable of curing to a hard state. This is generally designated a coated optical fiber. A tape element is fabricated by bundling several, typically four, coated optical fibers and coating the bundle with a taping material, followed by curing.

Typical of the coating materials are urethane acrylate base ultraviolet-curable resin compositions. As disclosed in JP-B 1-19694 and Japanese Patent Nos. 2,522,663 and 2,547,021, liquid UV-curable resin compositions comprising a urethane acrylate oligomer, a reactive monomer, and a polymerization initiator are known. To meet the recent demand for increasing the drawing speed of optical fibers for productivity improvement purposes, the UV curing system can find no solution other than the use of an increased number of UV lamps. This has a limit when curing is effected in a limited space. Japanese Patent No. 2,541,997 discloses UV and electron beams (EB) as exemplary actinic energy radiation, but does not refer to the accelerating voltage. We find that if electron beams of standard type are used to irradiate the coating material on optical fibers, there can be an undesirably increased transmission loss. For example, with glasses doped with germanium to provide an increased refractive index, the germanium can be altered and colored black.

In general, electron beams are produced by conducting electric current through a filament to heat the filament for emitting thermal electrons, and accelerating the thermal electrons under the impetus of a voltage (accelerating voltage) to form an electron beam. The accelerating voltage affects the penetration depth of electrons when irradiated to the optical fibers.

The aim herein is to provide a practical method of providing coated optical fibres other than by UV cure, with a view to speeding processing without excessive transmission losses, and providing new and useful coated fibres.

We have found that unexpectedly when an electron beam-curable coating material on an optical fiber is exposed to electron beams accelerated at an accelerating voltage not more than 150 kV, and desirably 30 to 100 kV, the coating material can be full cured while at the same time an increase of transmission loss across the optical fiber can be suppressed to 10% or less.

Aspects are set out in the claims.

In a first aspect, the invention provides a coated optical fiber comprising an optical fiber glass and a coating formed therearound by applying a coating material to the optical fiber glass and irradiating electron beams to the coating material for curing, wherein a transmission loss after curing of the coating material by the electron beam irradiation is 1.00 to 1.10 times a transmission loss prior to the electron beam irradiation.

In a second aspect, the invention provides a method for preparing a coated optical fiber comprising the steps of applying an electron beam-curable coating material to an optical fiber glass and irradiating to the coating material electron beams accelerated at an accelerating voltage of up to 150 kV for thereby curing the coating material.

In a third aspect, the invention provides a method for preparing a coated optical fiber comprising the steps of applying an electron beam-curable primary coating material to an optical fiber glass, irradiating to the primary coating material electron beams accelerated at an accelerating voltage of up to 150 kV for thereby curing the primary coating material, applying to the primary coating material a secondary coating material having a Young's modulus at least twice greater than the primary coating material, and irradiating to the secondary coating material electron beams accelerated at an accelerating voltage of up to 150 kV for thereby curing the secondary coating material.

In a fourth aspect, the invention provides a method for preparing a coated optical fiber comprising the steps of applying an electron beam-curable primary coating material to an optical fiber glass, applying to the primary coating material a secondary coating material having a Young's modulus at least twice greater than the primary coating material, and irradiating to the coating materials electron beams accelerated at an accelerating voltage of up to 150 kV for thereby curing the coating materials.

Preferably in the electron beam irradiating step of the above method, an electron-beam source of the vacuum tube type emits electron beams which are irradiated to the coating material in at least two directions.

In the coated optical fiber of the invention, quartz glass is used as the optical fiber glass. Any quartz glass fiber known for fiber optics may be used. It may contain dopant such as germanium for enhancing refractive index.

The optical fiber glass is coated with an electron beam-curable coating material, that is, a coating material based on an electron beam-curable resin.

The electron beam-curable resins are not critical as long as they have functional groups capable of radical polymerization upon exposure to electron beams. Desirable are compounds having at least one radical-polymerizable (meth)acryloyl group per molecule.

Illustrative examples of the compounds having one acryloyl group per molecule include methoxyethylene glycol (meth)acrylate, methoxypolyethylene glycol (meth)acrylate, nonylphenoxyethyl (meth)acrylate, nonylphenoxypolyethylene glycol (meth)acrylate, nonylphenoxypolypropylene glycol (meth)acrylate, 3-chloro-2-hydroxypropyl (meth)acrylate, phenoxyethyl (meth)acrylate, phenoxypolypropylene glycol (meth)acrylate, butoxypolyethylene glycol (meth)acrylate, alkyl (meth)acrylates, cyclohexyl (meth)acrylate, tetrahydrofurfuryl (meth)acrylate, isobornyl (meth)acrylate, benzyl (meth)acrylate, cumylphenol (meth)acrylate, cumylphenoxypolyethylene glycol (meth)acrylate, cumylphenoxypolypropylene glycol (meth)acrylate, 2-hydroxypropyl (meth)acrylate, 2-ethylhexyl (meth)acrylate, dicyclopentadiene (meth)acrylate, 2-hydroxy-3-phenoxypropyl (meth)acrylate, 2-(meth)acryloyloxyethyl-2-hydroxyethyl phthalic acid, 3-acryloyloxyglycerin mono(meth)acrylate, 2-hydroxybutyl (meth)acrylate, 2-hydroxy-1-(meth)acryloxy-3-(meth)acryloxypropane, polypropylene glycol mono(meth)-acrylate, polyethylene glycol mono(meth)acrylate, poly-ε-caprolactone mono(meth)acrylate, dialkylaminoethyl (meth)acrylates, glycidyl (meth)acrylate, mono[2-(meth)acryloyloxyethyl] acid phosphate, trichloroethyl (meth)acrylate, 2,2,3,3-tetrafluoropropyl (meth)acrylate, 2,2,3,4,4,4-hexafluorobutyl (meth)acrylate, perfluorooctylethyl (meth)acrylate, dicyclopentenyl (meth)acrylate, dicyclopentenyloxyalkyl (meth)acrylate, tricyclodecanyl (meth)acrylate, tricyclodecanyloxyethyl (meth)acrylate, isoboronyloxyethyl (meth)acrylate, and morpholine (meth)acrylate.

Of the compounds having two acrylic groups per molecule, polyether urethane acrylates obtained by reacting a polyether diol with a diisocyanate and further with a hydroxyl-bearing acrylate compound are preferred because they are easy to adjust the characteristics of a cured coating.

Examples of the polyether diol used herein include homopolymers and copolymers of alkylene oxides (e.g., C₂-C₅ alkylene oxides such as ethylene oxide, propylene oxide, butylene oxide, tetrahydrofuran and 3-methyltetrahydrofuran), homopolymers and copolymers of the foregoing alkylene oxides polymerized using aliphatic C₁₂-C₄₀ polyols (e.g., 1,2-hydroxystearyl alcohol and hydrogenated dimer diols) as the initiator, alkylene oxide (e.g., propylene oxide, butylene oxide and tetrahydrofuran) adducts of bisphenol A, and alkylene oxide (e.g., propylene oxide, butylene oxide and tetrahydrofuran) adducts of hydrogenated bisphenol A. These polyether diols may be used alone or in combinations of two or more.

The isocyanate components include organic diisocyanates such as aromatic, aliphatic and alicyclic diisocyanates. Exemplary are tolylene diisocyanate, 4,4-diphenylmethane diisocyanate, hydrogenated 4,4'-diphenylmethane diisocyanate, xylylene diisocyanate, hydrogenated xylylene diisocyanate, hexamethylene diisocyanate, and isophorone diisocyanate.

Examples of the hydroxyl-bearing (meth)acrylate include hydroxyalkyl (meth)acrylates such as 2-hydroxyethyl (meth)acrylate, 2- or 3-hydroxypropyl (meth)acrylate, 2- or 4-hydroxybutyl (meth)acrylate, and neopentyl glycol mono(meth)acrylate; 4-hydroxycyclohexyl (meth)acrylate, cyclohexane-1,4-dimethanol mono(meth)acrylate, and trimethylolpropane di(meth)acrylate. These hydroxyl-bearing (meth)acrylates may be used alone or in combinations of two or more. Of these hydroxyl-bearing (meth)acrylates, hydroxy C₂-C₄ alkyl (meth)acrylates, and especially 2-hydroxyethyl (meth)acrylate and 2-hydroxypropyl (meth)acrylate are preferred.

For the urethane-forming reaction, amine catalyst and metal catalysts such as tin and lead catalysts may be used.

Also, silicone acrylates in the form of diorganopolysiloxanes having an acryloyl group at the end of their molecular chain are preferred because of heat resistance and durability. Exemplary are silicone acrylates of the following general formula (1). 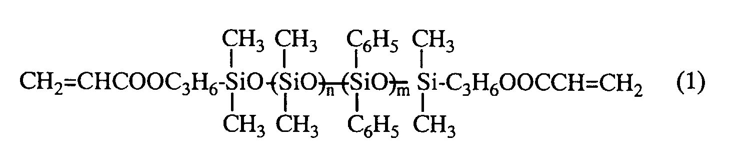 Herein, n is a positive number of 10 to 200, and m is a positive number of 5 to 100.

Other examples of the compounds having two acryloyl groups per molecule include the di(meth)acrylate of 2,2-dimethyl-3-hydroxypropyl-2,2-dimethyl-3-hydroxypropionate, ethylene glycol di(meth)acrylate, tetraethylene glycol di(meth)acrylate, polyethylene glycol di(meth)acrylate, propylene glycol di(meth)acrylate, polypropylene glycol di(meth)acrylate, 1,4-butane diol di(meth)acrylate, 1,6-hexane diol di(meth)acrylate, glycol di(meth)acrylate, neopentyl glycerin di(meth)acrylate, the di(meth)acrylate of bisphenol A-ethylene oxide adduct, the di(meth)acrylate of bisphenol A-propylene oxide adduct, 2,2'-di(hydroxyethoxyphenyl)propane di(meth)acrylate, tricyclodecane dimethylol di(meth)acrylate, dicyclopentadiene di(meth)acrylate, pentane di(meth)acrylate, and the (meth)acrylic acid adduct of 2,2-bis(glycidyloxyphenyl)propane.

Illustrative examples of the compounds having three acryloyl groups per molecule include trimethylol propane tri(meth)acrylate, trimethylol propane trioxyethyl(meth)acrylate, pentaerythritol tetra(meth)acrylate, dipentaerythritol hexa(meth)acrylate, tris(acryloxymethyl) isocyanurate, tris(acryloxyethyl) isocyanurate, tris(acryloxypropyl) isocyanurate, triallyl trimellitate, and triallyl isocyanurate.

Besides the (meth)acryloyl group-bearing compounds, there may be used radical-polymerizable N-vinyl compounds such as N-vinylpyrrolidone, N-vinylcaprolactam, N-vinylacetamide, and N-vinylformamide.

These electron beam-curable resins may be used alone or in admixture of two or more. A coating material is prepared by blending such resins with other ingredients, followed by agitation mixing. From the working standpoint, the coating material is desirably adjusted to a viscosity of 500 to 10,000 centipoise at 25°C for compatibility with manufacturing conditions of coated optical fibers and especially 500 to 4,000 centipoise at 25°C for compatibility with high speed manufacturing conditions.

In the coating material, additives including reaction promoters (e.g., photo-polymerization initiators and sensitizers), stabilizers (e.g., antioxidants and UV-absorbers), organic solvents, plasticizers, surfactants, silane coupling agents, coloring pigments, and organic or inorganic particles may be added in addition to the above-mentioned components, insofar as the objects of the invention are not impaired.

Although the coating material components are common to both the primary and secondary coating materials, they are desirably selected such that a cured product of the secondary coating material has a Young's modulus which is at least twice greater than the Young's modulus of a cured product of the primary coating material. More specifically, the cured coat of the primary coating material desirably has a Young's modulus of up to 0.2 kgf/mm² in order to protect the optical fiber from micro-bending by external forces and temperature changes. The cured coat of the secondary coating material overlying the primary coat desirably has a Young's modulus of at least 0.4 kgf/mm² in order to reinforce the optical fiber.

The coating material may be coated onto the optical fiber glass in a conventional manner, and the coat is cured by irradiating electron beams thereto. A typical procedure involves coating the primary coating material to the optical fiber glass, irradiating electron beams to the coat for curing, then coating the secondary coating material thereon, and irradiating electron beams to the secondary coating material for curing. Alternatively, immediately after the primary coating material is coated to the optical fiber glass, the secondary coating material is coated thereon, and electron beams are irradiated thereto. This procedure has the advantage of simplified process in addition to the effect of avoiding transmission loss through the optical fiber.

For the electron beam irradiation, electron beams emitted by an electron-beam source of the vacuum tube type may be used. For this purpose, the invention requires to use electron beams which are accelerated at an accelerating voltage of up to 150 kV, preferably up to 100 kV. Preferably the voltage is at least 30 kV. The coating material(s) can be fully cured while suppressing an increase of transmission loss of the optical fiber.

The dose of electron beams is determined by the electric current conducted through the filament and the processing speed. Usually the resin can be cured by irradiating electron beams in a dose of 1 to 4 Mrad (i.e., 10 to 40 kGy). To comply with a high speed of drawing, the current value is increased in proportion to the processing speed.

Preferably, electron beams are irradiated to the coating material in at least two directions, and especially in at least three directions, ensuring that the effectiveness of the invention is achieved.

By irradiating electron beams accelerated at an accelerating voltage of up to 150 kV, the coating material on the optical fiber glass is cured to complete the coated optical fiber. In the coated optical fiber, the transmission loss A after curing of the coating material (primary coating material and optional secondary coating material) by the electron beam irradiation and the transmission loss B prior to the electron beam irradiation (that is, the transmission loss of the optical fiber glass itself) are such that A/B is from 1.00 to 1.10, and especially from 1.00 to 1.05. This means that an increase of transmission loss is restrained to 10% or less. It is noted that the wavelength used in the (conventional) measurement of a transmission loss is not critical although the loss is typically measured at a wavelength of 1.30 µm, 1.39 µm or 1.55 µm.

### EXAMPLE

Examples of the invention are given below by way of illustration and not by way of limitation. All parts are by weight.

### Example 1

### Preparation of primary coating material

A reactor was charged with 106.8 g of nonylphenoxypolyethylene glycol acrylate, 17.3 g of 2,4-tolylene diisocyanate, 0.5 g of dibutyltin dilaurate, and 0.15 g of 2,6-di-tert-butylhydroxytoluene. In dry air, 11.3 g of 2-hydroxyethyl acrylate was added dropwise at such a rate as to keep the temperature below 15°C. The reactor was then heated at 30°C and reaction effected for 2 hours. With 398 g of polypropylene glycol having a number average molecular weight of 7,950 added, reaction was effected at 50 to 60°C for 3 hours. There was obtained an acrylic urethane oligomer containing 20% by weight of nonylphenoxypolyethylene glycol acrylate (designated Oligomer A).

A primary coating material was prepared by mixing 75 parts of Oligomer A, 5 parts of nonylphenoxypolyethylene glycol acrylate, 10 parts of lauryl acrylate, and 10 parts of N-vinylpyrrolidone. This material had a viscosity of 4,500 centipoise at 25°C.

### Preparation of secondary coating material

A reactor was charged with 51.5 g of 2,4-tolylene diisocyanate, 42.3 g of polytetramethylene ether glycol having a number average molecular weight of 2,000, 22.0 g of polyoxypropylene glycol having a number average molecular weight of 400, and 1.6 g of trioxypropylene glycol. In a nitrogen atmosphere, reaction was effected at 70 to 80°C for 3 hours. The reaction mixture was cooled to 40°C and the reactor was purged with dry air. Then 50.0 g of 2-hydroxyacrylate was added, the reaction mixture was gradually heated, and reaction was effected at 60 to 70°C for 2 hours. Then 0.1 g of dibutyltin dilaurate was admitted and reaction was effected for 4 hours. There was obtained an acrylic urethane oligomer (designated Oligomer B).

A secondary coating material was prepared by mixing 70 parts of Oligomer B, 10 parts of isobornyl acrylate, 10 parts of N-vinylpyrrolidone, and 10 parts of tricyclodecane dimethanol diacrylate. This material had a viscosity of 3,900 centipoise at 25°C.

Physical properties of cured coats of these compositions were measured as follows. The results are shown in Table 1.

### (1) Preparation of cured coat

Using an applicator, each of the primary and secondary coating materials was coated onto a glass plate to a thickness of about 50 µm. An electron-beam source of the vacuum tube type Min-EB (Ushio Electric K.K.) was operated to emit and accelerate electron beams at an accelerating voltage of 50 kV. Each coat was exposed to electron beams in a dose of 3 Mrad, obtaining a cured coat.

### (2) Young's modulus

The cured coat was conditioned at 25°C and RH 50% for 24 hours before a 2.5% tensile modulus was measured at a gage mark distance of 25 mm and a pulling rate of 1 mm/min.

### (3) Tensile strength and elongation at rupture

The cured coat was conditioned at 25°C and RH 50% for 24 hours before measurement was made at a gage mark distance of 25 mm and a pulling rate of 50 mm/min.

**Table 1**

| Cured coat | Young's modulus (kgf/mm²) | Elongation at rupture (%) | Tensile strength (kgf/mm²) |
|---|---|---|---|
| Primary coating material | 0.055 | 185 | 0.1 |
| Secondary coating material | 100 | 40 | 4.3 |

### Example 2

Onto a bare single-mode optical fiber having an outer diameter of 125 µm and a transmission loss of 0.188 dB/km at a wavelength of 1.55 µm, the primary coating material in Example 1 was applied through a coating die such that the cured coat might have an outer diameter of 180 µm. An electron beam source CB-175 (Iwasaki Electric K.K.) was operated to emit and accelerate electron beams at an accelerating voltage of 100 kV, which were perpendicularly irradiated to the coat from two directions in a dose of 3 Mrad. Thereafter, the secondary coating material in Example 1 was similarly applied onto the primary coating such that the cured coat might have an outer diameter of 250 µm, and cured by electron beam irradiation. The coated optical fiber had a transmission loss of 0.189 dB/km at a wavelength of 1.55 µm. Since the transmission loss after electron beam irradiation divided by the transmission loss prior to electron beam irradiation was 1.005, there was noticed little increase of transmission loss by electron beam irradiation.

### Example 3

Onto a bare single-mode optical fiber having an outer diameter of 125 µm and a transmission loss of 0.189 dB/km at a wavelength of 1.55 µm, the primary coating material in Example 1 was applied through a coating die such that the cured coat might have an outer diameter of 180 µm. The secondary coating material in Example 1 was similarly applied onto the primary coating such that the cured coat might have an outer diameter of 250 µm. An electron beam source CB-175 (Iwasaki Electric K.K.) was operated to emit and accelerate electron beams at an accelerating voltage of 100 kV, which were irradiated to the coats in a dose of 3 Mrad as in Example 2. The coated optical fiber had a transmission loss of 0.189 dB/km at a wavelength of 1.55 µm. There was noticed no increase of transmission loss by electron beam irradiation.

### Comparative Example 1

Onto a bare single-mode optical fiber having an outer diameter of 125 pin and a transmission loss of 0.188 dB/km at a wavelength of 1.55 µm, the primary coating material in Example 1 was applied as in Example 2. An electron beam source CB-175 (Iwasaki Electric K.K.) was operated to emit and accelerate electron beams at an accelerating voltage of 165 kV, which were irradiated to the coat in a dose of 3 Mrad. Thereafter, the secondary coating material in Example 1 was similarly applied onto the primary coating such that the cured coat might have an outer diameter of 250 µm, and cured by irradiating electron beams accelerated at an accelerating voltage of 165 kV. The coated optical fiber had a transmission loss of 0.216 dB/km at a wavelength of 1.55 µm. Since the transmission loss after electron beam irradiation divided by the transmission loss prior to electron beam irradiation was 1.15, there was noticed a substantial increase of transmission loss by the irradiation of high-voltage-accelerated electron beams.

There has been described a coated optical fiber with a coating layer cured by the irradiation of low-voltage-accelerated electron beams, which fiber has a minimized increase of transmission loss after curing.

Japanese Patent Application No. 11-113851 is incorporated herein by reference.

Although some preferred embodiments have been described, many modifications and variations may be made thereto in light of the above teachings. It is therefore to be understood that the invention may be practised otherwise than as specifically described in the examples.

## Claims

1. A method for preparing a coated optical fiber, comprising
applying an electron beam-curable coating material to a glass optical fiber, and
curing the coating material by irradiation with electron beam radiation accelerated at an accelerating voltage of not more than 150 kV.

2. A method according to claim 1 in which the accelerating voltage is not more than 100 kV.

3. A method according to claim 1 or 2 in which the electron beam source is of the vacuum-tube type.

4. A method according to any one of the preceding claims in which the cured coating comprises an inner, primary coating and an outer, secondary coating of material having a Young's modulus at least twice that of the primary coating.

5. A method according to claim 4 comprising
applying electron beam-curable primary coating material to the optical fiber;
curing the primary coating material by electron beams irradiation as mentioned;
applying over the primary coating a secondary coating material, and
curing the secondary coating material by electron beam irradiation as mentioned.

6. A method according to claim 4 comprising
applying electron beam-curable primary coating material to the optical fiber;
applying over the primary coating material a secondary coating material, and
curing the primary and secondary coating materials together by electron beam irradiation as mentioned.

7. A method according to any one of the preceding claims in which said electron beam irradiation is from more than one direction relative to the coating.

8. A coated optical fibre obtainable or obtained by a method according to any one of the preceding claims.

9. A coated optical fibre comprising an optical fibre glass and a coating formed therearound by applying a coating material to the optical fiber glass and irradiating electron beams to the coating material for curing, wherein a transmission loss after curing of the coating material by the electron beam irradiation is 1.00 to 1.10 times a transmission loss prior to the electron beam irradiation.
